(19) Europäisches Patentamt
European Patent Office
Office européen des brevets

(11) **EP 2 588 354 B1**

(12) **EUROPÄISCHE PATENTSCHRIFT**

(45) Veröffentlichungstag und Bekanntmachung des Hinweises auf die Patenterteilung:
**12.02.2014 Patentblatt 2014/07**

(21) Anmeldenummer: **11727155.1**

(22) Anmeldetag: **16.06.2011**

(51) Int Cl.:
**B60W 20/00** *(2006.01)*     **B60W 30/18** *(2012.01)*
**B60W 10/06** *(2006.01)*     **B60W 10/08** *(2006.01)*

(86) Internationale Anmeldenummer:
**PCT/EP2011/060070**

(87) Internationale Veröffentlichungsnummer:
**WO 2012/000806 (05.01.2012 Gazette 2012/01)**

(54) **VERFAHREN ZUR STEUERUNG EINES HYBRIDFAHRZEUGES**

METHOD FOR CONTROLLING A HYBRID VEHICLE

PROCÉDÉ DE COMMANDE D'UN VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2010 AT 11202010**

(43) Veröffentlichungstag der Anmeldung:
**08.05.2013 Patentblatt 2013/19**

(73) Patentinhaber: **AVL List GmbH 8020 Graz (AT)**

(72) Erfinder:
• **KORSUNSKY, Evgeny A-8010 Graz (AT)**

• **STOLZ, Michael A-8045 Graz (AT)**
• **EBNER, Peter A-8042 Graz (AT)**

(74) Vertreter: **Babeluk, Michael Patentanwalt Mariahilfer Gürtel 39/17 1150 Wien (AT)**

(56) Entgegenhaltungen:
**WO-A2-2008/071381     DE-A1-102004 055 128
DE-A1-102008 008 238     US-A- 5 806 617
US-A1- 2006 042 587**

**Beschreibung**

Die Erfindung betrifft ein Verfahren zur Steuerung eines Hybridfahrzeuges, bei dem zumindest zwei Aggregate Drehmoment für einen Hybridfahrzeugantrieb bereitstellen, wobei der aktuelle Fahrzustand und die aktuelle Betriebskonfiguration der Komponenten des Antriebsstranges erfasst werden.

Aus der DE 44 30 670 B4 ist eine Steuervorrichtung für einen in einem Fahrzeug montierten Generator/Motor bekannt, der als Elektromotor und als elektrischer Generator arbeitet, um eine elektrische Speichereinrichtung zu laden. Die Steuervorrichtung weist eine Einrichtung zur Berechnung der Menge zurückspeicherbarer Energie auf der Basis der Fahrzeuggeschwindigkeit auf, wobei die Steuereinrichtung den Generator/Motor in Abhängigkeit vom momentanen Ladezustand, der Menge zurückspeicherbare Energie und der Menge der zum Laden erforderlichen elektrischen Energie ansteuert.

Ein Verfahren zum Ermitteln von Zuständen eines Hybridantriebsstranges eines Fahrzeuges ist aus der DE 10 2007 050 652 A1 bekannt. Dabei werden aus bestimmten Zustandsgrößen des Aktuators der Hybridsteuerung eines Hybrid-Antriebsstranges die Ist-Zustände des Antriebsstranges ermittelt.

Die US 2002/062183 A1 offenbart ein Steuersystem für einen Hybridantriebsstrang, wobei die verbrauchte elektrische Energie und der Ladezustand der Batterie berechnet wird, worauf - in Abhängigkeit der verbrauchten Energie und der angeforderten Energie - Betriebsmodi einer Brennkraftmaschine und eines Elektromotors gewählt werden.

Die US 7 349 776 B2 beschreibt ein Steuersystem für ein Fahrzeug mit einer Antriebssteuerung, einer Lenksteuerung, einer Bremssteuerung und einer Aufhängungssteuerung. Diese untergeordneten Systeme sind alle in verschiedenen Betriebsmoden betreibbar und werden von einer Betriebsmodisteuerung gesteuert, wobei jeder der Betriebsmodi mit einem bestimmten Fahrzustand korrespondiert.

Aus der US 6 230 496 B1 ist ein Energiemanagementsystem für Hybridfahrzeuge bekannt. Dabei wird das Niveau der gespeicherten Energie auf einem definierten Sollwert eingestellt, so dass das aus kinetischer Energie des Fahrzeuges, mechanischer potentieller Energie des Fahrzeuges und potentieller Energie des elektrischen Speichers bestehende Gesamtenergieniveau des Hybridfahrzeuges einen definierten Wert beibehält.

Die US 5 806 617 A beschreibt ein Hybridfahrzeug wobei die Brennkraftmaschine stets mit optimalem Wirkungsgrad in Abhängigkeit der Last betrieben wird, wobei das Drehmoment des Elektromotors angepasst wird.

Aus der US 6 766 874 B2 ist ein System und ein Verfahren zum Betreiben eines Hybridfahrzeuges bekannt, wobei eine Steuerungseinheit mehrere Betriebsmodi in Abhängigkeit des Ladezustandes der Batterie und einer Beschleunigungsanforderung aufweist.

Die US 2004/060751 A1 beschreibt ein Verfahren zur Steuerung der Betriebscharakteristik eines Hybridfahrzeuges mit einer Brennkraftmaschine, einer elektrischen Maschine und einer Fahrzeugbatterie, welche nur dann geladen wird, wenn dies einen besseren Wirkungsgrad verspricht als das Drosseln der Brennkraftmaschine.

Aus der WO 2008/071381 A2 ist ein Verfahren und eine Vorrichtung zum Steuern des Hybridantriebes eines Kraftfahrzeuges mit einer Verbrennungskraftmaschine, einem Schaltgetriebe, mindestens einer elektrischen Maschine, mindestens einer Kupplung und einem Energiespeicher, sowie mindestens einer angetriebenen Achse bekannt. Um maximalen Wirkungsgrad und Lebensdauer der Komponenten zu erreichen, ist vorgesehen, dass - ausgehend von Fahrerwunsch und Betriebszustand - entschieden wird, welche Betriebsmodi möglich sind, und für die möglichen Betriebsmodi entschieden wird, welche Getriebegänge in Frage kommen, so dass eine größere Anzahl von Modi zur Auswahl stehen. Für alle diese Modi werden dem Fahrerwunsch entsprechende Arbeitspunkte unter Berücksichtigung von Betriebszustand und Systemzustand ermittelt, die Modi bewertet und der am günstigsten bewertete Modus ausgewählt.

Insbesondere bei Hybridfahrzeugen mit komplexen Konfigurationen der Komponenten des Antriebsstranges ist für eine Umsetzung der Fahrerwünsche mit optimalem Wirkungsgrad oder optimalem Fahrverhalten nicht nur die rasche Veränderung der dynamischen Größen, wie Drehmomente der Antriebsaggregate, sondern auch relativ zeitintensives Verändern der Betriebskonfiguration notwendig.

Aufgabe der Erfindung ist es, ein Verfahren bereitzustellen, welches erlaubt, für jede Fahrsituation immer den jeweils besten Betriebsmodus bereitzustellen.

Erfindungsgemäß wird dies dadurch erreicht, dass zumindest für alle im aktuellen Fahrzustand relevanten Betriebsmodi des Hybridfahrzeuges jeweils eine Bewertungsgröße R berechnet wird, und dass zwei im aktuellen Fahrzustand relevante Betriebsmodi des Hybridfahrzeuges ausgewählt werden, wobei der erste Betriebsmodus den höchsten Wert aller Bewertungsgrößen R und der zweite Betriebsmodus den höchsten Wert aller Bewertungsgrößen R derjenigen Betriebsmodi hat, deren erforderliche Betriebskonfiguration mit der aktuellen Betriebskonfiguration übereinstimmt, und dass basierend auf der Auswahl Anforderungen für eine neue Betriebskonfiguration zur Realisierung des ausgewählten ersten Betriebsmodus, und Anforderungen an dynamischen Größen, vorzugsweise Drehmomentanforderungen für den jeweils ausgewählten zweiten Betriebsmodus, vorzugsweise mittels Berechnungsvorschriften für dynamische Größen, ermittelt werden.

Die Anforderungen werden in zwei Gruppen aufgeteilt: die Anforderungen an dynamische Größen und die Anforderungen an Betriebskonfiguration.

Üblicherweise liegt die Ausführungsdauer der Steuerungsanforderungen in mindestens zwei unterschiedlichen Bereichen: einige Anforderungen können relativ schnell und sicher umgesetzt werden, wie die von Antriebsaggregaten geforderten Momente. Demgegenüber stehen die Anforderungen für die Umkonfiguration des Antriebsstrangs (zum Beispiel Kupplung schließen/öffnen, nächsten höheren Gang einlegen, oder ähnliches.), welche normalerweise viel mehr Zeit erfordern als die Ausführung des Momentenwunsches. Zudem kann es passieren, dass die Forderungen für neue Konfiguration des Antriebsstrangs aus unterschiedlichen Gründen überhaupt nicht ausgeführt werden (zum Beispiel wenn die Anforderung einen Gang umzuschalten von dem Fahrer ausgeführt werden soll, diese aber nicht erfolgt).

Die Anforderungen an die Betriebskonfiguration, beinhaltet alle Anforderungen an "langsamen" und/oder in der Umkonfigurationsfähigkeit unsicheren Größen des Fahrzeugzustands, wie zum Beispiel eingelegter Gang im Getriebe, Zustand der Nebenaggregate, Stellung der Kupplungen, oder dergleichen. Die Anforderung an dynamischen Größen beinhaltet Anforderungen an schnellen und zusätzlich im Normalbetrieb immer entsprechend umkonfigurierbaren Größen, wie zum Beispiel von den Antriebsaggregaten geforderte Momente.

In jedem Berechnungsschritt werden im Allgemeinen zwei Betriebsmodi ausgewählt - einer der die Ausführung der "langsam" umsetzbaren Anforderungen an Betriebskonfiguration benötigt, und ein zweiter der nur die Erfüllung der "schnell" umsetzbaren dynamischen Anforderungen braucht. Dabei wird für alle im aktuellen Fahrzustand relevanten Betriebsmodi jeweils eine Bewertungsgröße R (Rating) berechnet und der erste Betriebsmodus so ausgewählt, dass er den höchsten Wert aller Ratings hat, und der zweite Betriebsmodus den höchsten Wert aller Ratings der Betriebsmodi, deren erforderliche Betriebskonfiguration mit der aktuellen Betriebskonfiguration übereinstimmt, hat.

Bei der Berechnung der Bewertungsgrößen R kann zumindest ein aktueller Wert W1 für den Fahrerwunsch, vorzugsweise die Fahrpedalstellung, der Bremspedalstellung, die Gangwahl, ein Einschaltzustand einer Klimaanlage und/oder der Einschaltzustand einer Ökonomiefunktion, berücksichtigt werden. Weiters kann zumindest ein aktueller Wert W2 für die Randbedingungen des Fahrbetriebes, vorzugsweise der aktuelle elektrische Energiebedarf, und/oder zumindest ein aktueller Wert W3 für den aktuellen Zustand der Komponenten des Antriebsstranges, vorzugsweise die Temperatur und/oder das zulässige maximale Moment der Aggregate, berücksichtigt werden.

Besonders vorteilhaft ist es, wenn bei der Berechnung der Bewertungsgrößen R zumindest ein Wert W4 der das aktuelle Fahrmanöver kennzeichnet, vorzugsweise die Fahrgeschwindigkeit, die Fahrzeugbeschleunigung und/oder die Fahrzeugneigung, berücksichtigt wird.

Weiters vorteilhaft ist es, wenn bei der Berechnung der Bewertungsgrößen R ein aktueller Wert W5 für den Zustand der Energiespeichersysteme, vorzugsweise die verfügbare Energiemenge und/oder die maximal erlaubte Leistung, berücksichtigt wird.

Vorzugsweise ist vorgesehen, dass bei der Berechnung der Bewertungsgrößen R mit einem aktuellen Wert W6 der Wirkungsgrad des gesamten Systems, oder ein Wirkungsgrad des Teilsystems, vorzugsweise der Gesamtwirkungsgrad des Fahrzeugs für den Leistungsfluss vom Kraftstofftank bis zu den Antriebsrädern, berücksichtigt wird.

In Weiterführung der Erfindung hat es sich darüber hinaus als sehr vorteilhaft erwiesen, wenn bei der Berechnung der Bewertungsgrößen R zumindest auch ein aktueller Wert W7 für Vorgaben an das Fahrzeug, vorzugsweise hinsichtlich Kraftstoffverbrauch, Schadstoffemissionen, Geräusch und/oder Fahrbarkeit, berücksichtigt wird.

Das erfindungsgemäße Verfahren kann für unterschiedliche Varianten des parallelen Hybrid, wie Mikro-, Mild-, Vollhybrid und für Powersplit Hybrid angewendet werden. Es eignet sich für alle beliebigen Kombinationen von Betriebsmodi eines bestimmten Hybridfahrzeuges.

Es kann für unterschiedliche Typen der Antriebsstrangkomponenten (zum Beispiel manuelle oder automatisierte Getriebe, Diesel oder Benzin Verbrennungsmotor als erstes Antriebsaggregat, Elektromotor oder hydraulischer Motor als zweites Antriebsaggregat, oder dergleichen) angewendet werden.

Die Steuerungsalgorithmen, welche auf dem Verfahren basieren, können in einem oder in mehreren elektronischen Steuergeräten aufgeteilt implementiert werden. Besonders vorteilhaft ist es, wenn die Ratings und Anforderungen der Betriebsmodi parallel in mehreren Steuergeräten berechnet werden. Dadurch lässt sich eine Redundanz und Ausfallsicherheit erreichen.

Die Steuerungsalgorithmen, welche auf dem Verfahren basieren, ermöglichen eine einfache Ergänzung um weitere Betriebsmodi ohne notwendige Änderungen in den Berechnungsvorschriften für die anderen Modi zu verursachen.

Der Implementierungsaufwand kann wesentlich reduziert werden, wenn die Umschaltungen der Antriebsstrangkonfiguration anforderungsorientiert und nicht betriebsmodeorientiert erfolgen.

Die Bewertungsgrößen R für die Betriebsmoden können beispielsweise als Produkt der Werte W1, W2, W3, W4, W5, W6, W7 berechnet werden, sodass gilt:

$$R = W1 \cdot W2 \cdot W3 \cdot W4 \cdot W5 \cdot W6 \cdot W7.$$

Alternativ dazu können die Bewertungsgrößen R für die Betriebsmoden auch als gewichtete Summe der Werte W1, W2, W3, W4, W5, W6, W7 gemäß folgender Gleichung berechnet werden:

$$R = \sum_{n=1}^{7} K_n \cdot W_n \text{ ,}$$

wobei $K_n$ ein Wichtungsfaktor ist, der die Wichtigkeit des Werts $W_n$ für die Bewertung des Betriebsmodus widerspiegelt.

Die Berechnung der Bewertungsgrößen R kann beliebig erweitert werden, um unterschiedliche Ziele, vorausschauende Strategien, etc. zu berücksichtigen.

Die Erfindung wird im Folgenden anhand der Fig. näher erläutert. Es zeigen schematisch:

Fig. 1     die Auswahl der beiden Betriebsmodi beim erfindungsgemäßen Verfahren;

Fig. 2     eine mögliche Topologie eines Hybridfahrzeuges zur Durchführung des erfindungsgemäßen Verfahrens;

Fig. 3     den Signalfluss beim erfindungsgemäßen Verfahren;

Fig. 4     ein Beispiel für die Berechnung der Momentenanforderungen;

Fig. 5     ein Beispiel für die Gaspedal- und Bremspedalabhängigen Faktoren zur Berechnung des Wertes W1;

Fig. 6     ein Beispiel für die Bestimmung des Wertes W2 in Abhängigkeit der elektrischen Leistungsanforderung;

Fig. 7     ein Beispiel für die Bestimmung des Wertes W3 als Funktion der Temperatur des Elektromotors;

Fig. 8     ein Beispiel für die Berechnung des Wertes W4 über ein Kennfeld in Abhängigkeit der Fahrzeugbeschleunigung und der Fahrzeugneigung;

Fig. 9     ein Beispiel für die Berechnung des Wertes W5 als Funktion des Ladezustandes der Batterie; und

Fig. 10    ein Beispiel für die Berechnung des Wertes W7 als Funktion von Geräuschpegel- und Drehzahlunförmigkeit.

Ein Hybridfahrzeug 1 soll für unterschiedliche Fahrsituationen bzw. Fahrmanöver, wie zum Beispiel Beschleunigung, Bremsen, Anfahren, oder dergleichen, den Fahrerwunsch unter Randbedingungen, die aus dem Zustand des Fahrzeugs als gesamtes Systems resultieren, erfüllen. Die Steuerung des Hybridfahrzeuges 1 muss daher abhängig vom Fahrerwunsch und vom Fahrzeugzustand die Einzelkomponenten des Antriebsstranges und die Nebenaggregate steuern. Dabei variiert die Berechnungsvorschrift der Steuerung von Fahrsituation zu Fahrsituation sehr stark.

Um Modularität und Wartbarkeit zu gewährleisten ist eine Gliederung der einzelnen Berechnungsvorschriften in Betriebsmodi sinnvoll.

Unter einem Betriebsmodus M eines Hybridfahrzeuges 1 versteht man einen Fahrzeugzustand mit:

(1) einem bestimmten Zustand des Antriebsstrangs (ein Aggregat 2 [zum Beispiel Brennkraftmaschine] ein- oder ausgeschaltet, Kupplungen 4, 5 zu oder offen, bestimmter Gang im Getriebe 6 eingelegt), ferner mit

(2) einer bestimmten Regel der Aufteilung der Drehmomente zwischen zwei (oder mehreren) Antriebsaggregaten 2, 3 und

(3) einer bestimmten Regel der Aufteilung der Energieflüsse zwischen vorhandenen Energiespeichern 14, Antriebsaggregaten 2, 3 und anderen Energieverbrauchern.

Die Anzahl und die Art der Betriebsmodi M sind u.a. von Antriebsstrangtopologien des Hybridfahrzeuges 1, die sich durch die Platzierung der Antriebsstrangaggregate und anderen Antriebsstrangkomponenten (Getriebe, Kupplungen, Differenzial, oder dergleichen) unterscheiden, abhängig.

Es soll der für die aktuelle Fahrsituation optimale Betriebsmodus M ausgewählt und die entsprechenden Anforderungen A (=Steuersignale) an die Antriebsstrangkomponenten generiert werden.

Üblicherweise liegt die Ausführungsdauer der Steuerungsanforderungen in mindestens zwei unterschiedlichen Bereichen: einige Anforderungen $A_D$ können relativ schnell und sicher umgesetzt werden, wie die von Antriebsaggregaten geforderten Momente. Demgegenüber stehen die Anforderungen $A_K$ für die Umkonfiguration des Antriebsstrangs (zum Beispiel Kupplung 4, 5 schließen / öffnen, nächsten höheren Gang einlegen, oder ähnliches), welche normalerweise viel mehr Zeit erfordern als die Ausführung des Momentenwunsches. Zudem kann es passieren, dass die Forderungen für neue Konfiguration des Antriebsstrangs aus unterschiedlichen Gründen überhaupt nicht ausgeführt werden (zum Beispiel wenn die Anforderung einen Gang umzuschalten von dem Fahrer ausgeführt werden soll, diese aber nicht erfolgt).

Es werden hier zwei Gruppen der Betriebsgrößen unterschieden:

Die erste Gruppe, die Betriebskonfiguration, beinhaltet alle "langsamen" und/oder in der Umkonfigurationsfähigkeit unsicheren Größen des Fahrzeugzustands (wie zum Beispiel eingelegter Gang in Getriebe, Zustand der Nebenaggregate, ...).

Die zweite Gruppe besteht aus "schnellen" und zusätzlich im Normalbetrieb immer entsprechend umkonfigurierbaren dynamischen Größen, wie etwa dem veränderbaren Drehmoment der Aggregate 2, 3.

Schnell und langsam sind hier jeweils relativ zur Dynamik des Fahrzeugantriebs zu verstehen.

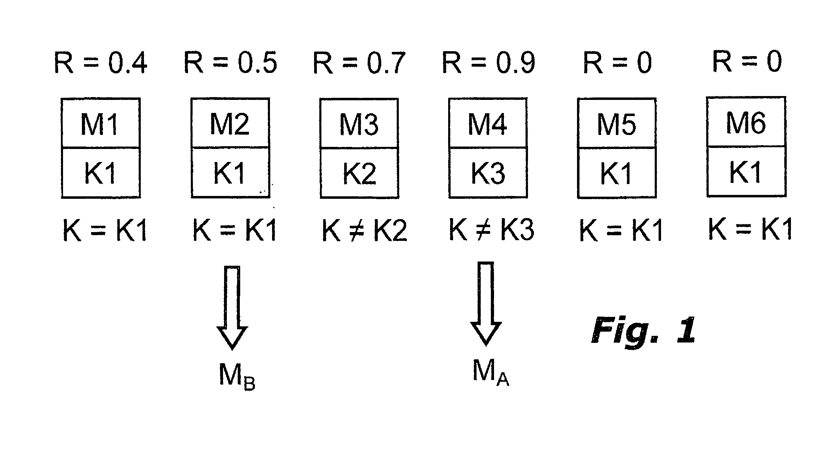

Das erfindungsgemäße Verfahren sieht folgenden Ansatz zur Hybridsteuerung vor: Die Anforderungen werden in zwei Gruppen aufgeteilt: die Anforderungen an die Betriebskonfiguration K und die Anforderungen an die dynamische Größen. In jedem Berechnungsschritt werden im allgemeinen zwei Betriebsmodi $M_A$, $M_B$ ausgewählt - ein erster Betriebsmodus $M_A$, der die Ausführung der "langsam" umsetzbaren Anforderungen an Betriebskonfiguration benötigt, und ein zweiter Betriebsmodus $M_B$, der nur die Erfüllung der "schnell" umsetzbaren dynamischen Anforderungen braucht. Dabei wird für alle im aktuellen Fahrzustand relevanten Betriebsmodi M1, M2, M3, M4 jeweils eine Bewertungsgröße (Rating) R berechnet und der erste Betriebsmodus $M_A$ so ausgewählt, dass er den höchsten Wert aller Bewertungsgrößen R hat, und der zweite Betriebsmodus $M_B$ den höchsten Wert aller Bewertungsgrößen R der Betriebsmodi M1, M2, deren erforderliche Betriebskonfiguration K1 mit der aktuellen Betriebskonfiguration K übereinstimmt, hat. Die Fig. 1 zeigt ein Beispiel, bei welchem die Betriebsmodi M1 (beispielweise, Laden der Batterie beim Generatorbetrieb der elektrischen Maschine), M2 ("substituierendes Boost", bei dem ein Teil des vom Fahrer gewünschten Moments durch elektrische Maschine ersetzt wird), M3 (Hochschalten), M4 (rein elektrisches Fahren) für aktuelle Fahrmanöver (Fahrt mit konstanter Fahrzeuggeschwindigkeit) relevant sind, und die Betriebsmodi M5 (Rekuperation), M6 (konventionelles Bremsen) nicht relevant sind. Die höchste Bewertungsgröße aller relevanten Betriebsmodi M1, M2, M3, M4 erreicht der Modus M4 (rein elektrisches Fahren) mit dem Wert R=0.9. Allerdings stimmt die Betriebskonfiguration K3 des Modus M4 mit aktueller Betriebskonfiguration K nicht überein. Um Betriebsmodus M4 durchzuführen zu können, muss die Antriebsstrangskonfiguration geändert werden - Trennkupplung 5 muss geöffnet, ein neutraler Gang im Getriebe 6 muss eingelegt und das Aggregat 2 (Brennkraftmaschine) abgestellt werden. So wird M4 als erster Betriebsmodus $M_A$ ausgewählt. Die Betriebsmodi M1 und M2 weisen die gleiche Betriebskonfiguration K1 auf wie die aktuelle Betriebskonfiguration K des Hybridfahrzeuges. Daher wird M2 ("substituierendes Boosten") als zweiter Betriebsmodus $M_B$ mit einer Bewertungsgröße R=0.5 ausgewählt.

Dabei werden die Anforderungen $A_K$ - Trennkupplung 5 öffnen, neutraler Gang im Getriebe 6 einlegen und Aggregat 2 (Brennkraftmaschine) abstellen - an die entsprechende Antriebsstrangkomponente geschickt. So lange diese Anforderungen nicht umgesetzt sind, werden die Momentenanforderungen $A_D$ generiert die dem Betriebsmodus M2 entsprechen.

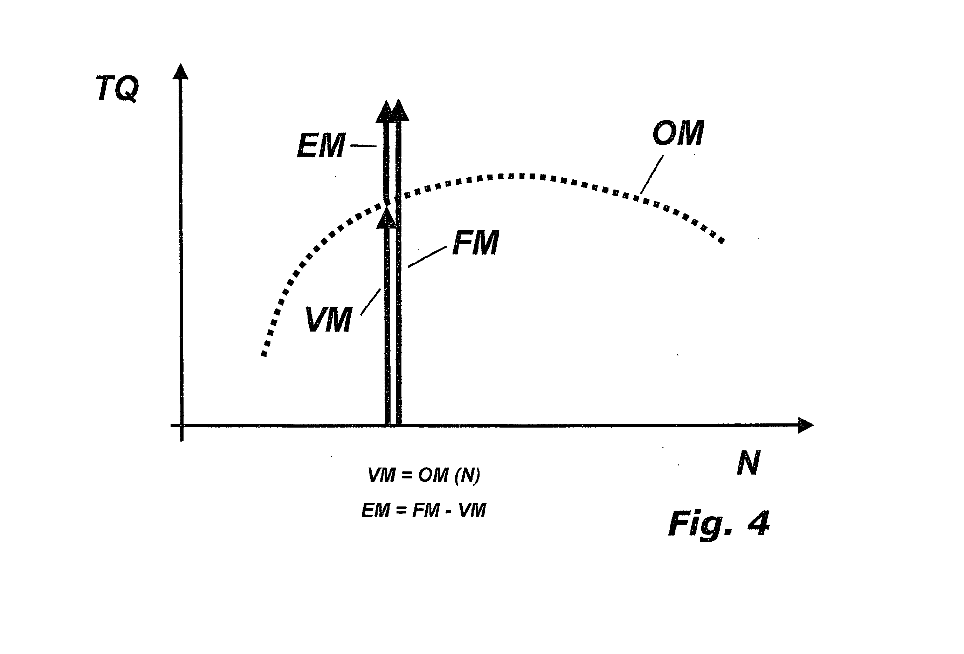

Die Berechnungsvorschriften für die Anforderungen $A_D$ für die dynamischen Größen (zum Beispiel, die Anforderungen für die Momentenaufteilung zwischen Verbrennungsmotor und E-Maschine) ziehen vor allem das Fahrerwunschmoment, die maximalen Momente der Antriebsaggregate und die Fahrzeuggeschwindigkeit heran. Zum Beispiel wird, wie in Fig. 4 gezeigt, für den Betriebsmodus M2 ("substituierendes Boosten") ein solches Moment VM des Verbrennungsmotors ausgewählt, das dem minimalen Kraftstoffverbrauch entspricht (Kurve OM in Fig. 4). Das erforderliche Moment EM der E-Maschine wird dann als Differenz zwischen dem Fahrerwunschmoment FM und dem ausgewählten Moment des Verbrennungsmotors berechnet:

$$VM = OM,$$

$$EM = FM - VM.$$

Bei der Berechnung der Bewertungsgrößen R für den jeweiligen Betriebsmodus M1, M2, M3, M4, M5, M6 können verschiedene aktuelle Werte W1, W2, W3, W4, W5, W6, W7 wie folgt berücksichtigt werden:

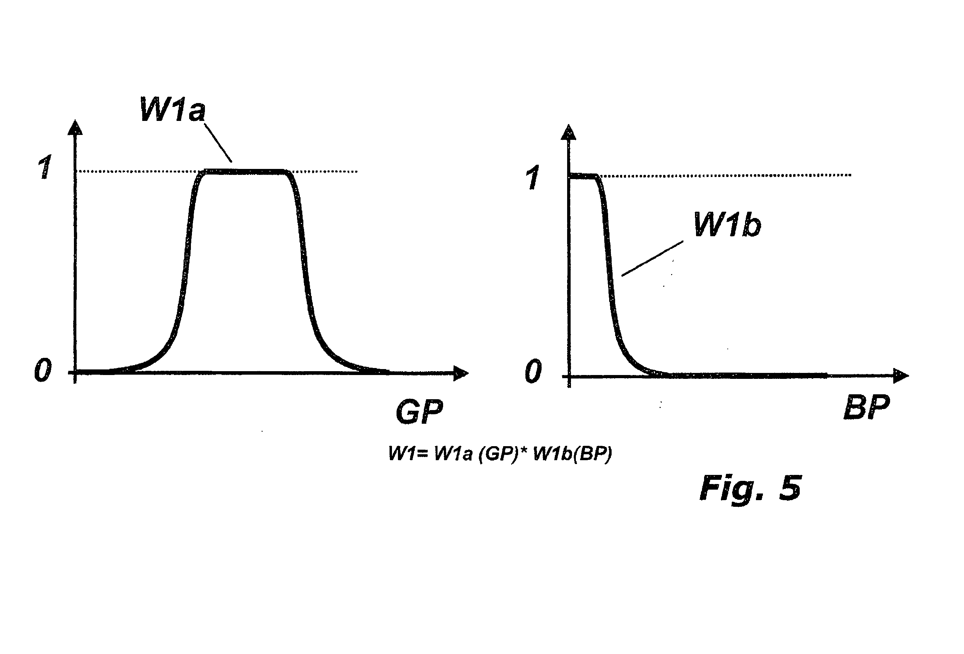

- Aktueller Wert W1 für den Fahrerwunsch, zum Beispiel der Fahrpedalstellung GP, der Bremspedalstellung BP, der Gangwahl, des Einschaltzustandes einer Klimaanlage und/oder des Einschaltzustand einer Ökonomiefunktion. Beispielsweise, wird der Wert W1 für Modus M2 ("substituierendes Boosten") als ein Produkt zweier Faktoren W1a, W1b berechnet, wie in Fig. 5 gezeigt ist, wobei der erste Faktor W1a aus einer glatten Funktion der Fahrpedalstellung GP berechnet wird, die einen Wert Null für niedrige (z.B. bis 5%) und hohe (z.B. ab 70%) Fahrpedalstellungen GP annimmt, und einen maximalen Wert 1 in bestimmten Bereichen (z.B. zwischen 30% und 50%) der Fahrpedalstellung GP erreicht. Der zweite Faktor W1b nimmt einen Wert 1 für niedrige Bremspedalstellungen BP (z.B. bis 2%) an und ist gleich Null für andere Werte der Bremspedalstellung. Logischerweise wird der Wert W1 für die anderen Betriebsmodi mit anders berechneten Faktoren kalkuliert.

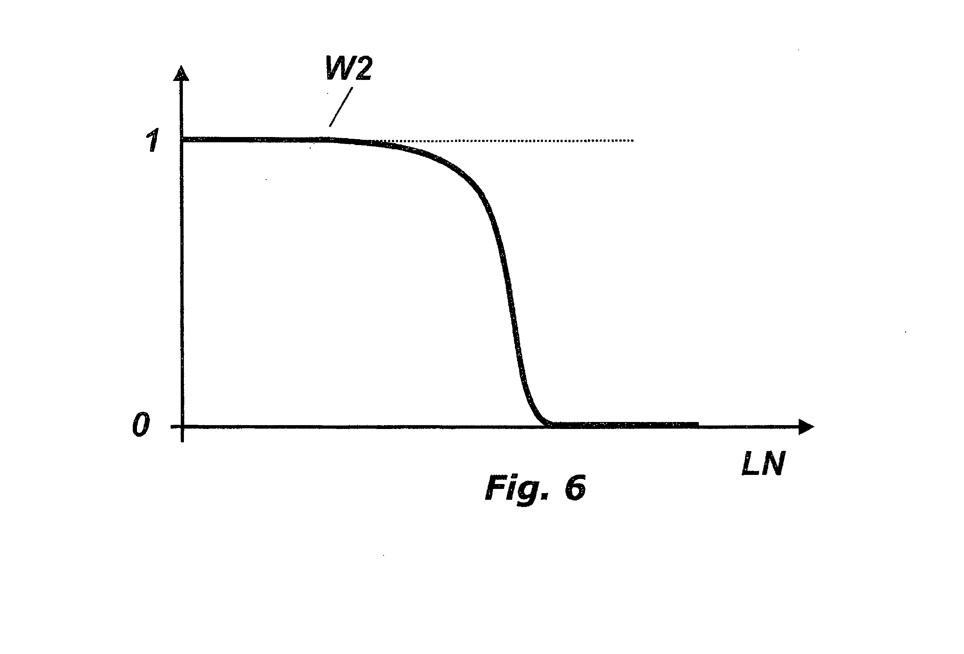

- Aktueller Wert W2 für die Randbedingungen des Fahrbetriebes, zum Beispiel dem aktuellen elektrischen Energiebedarf, berechnet aus aktuellen Signalen entsprechend dem elektrischen Strom und der Spannung. Beispielsweise wird der Wert W2 für Modus M4 ("rein elektrisches Fahren") als eine glatte Funktion der Leistungsanforderung LN der elektrischen Nebenaggregate berechnet, die einen maximalen Wert 1 für die niedrige angeforderte elektrische Leistungen (z.B. bis 0,5 kW) annimmt und einen Wert Null bei größeren Leistungen (z.B. ab 2 kW) erreicht (siehe Fig. 6).

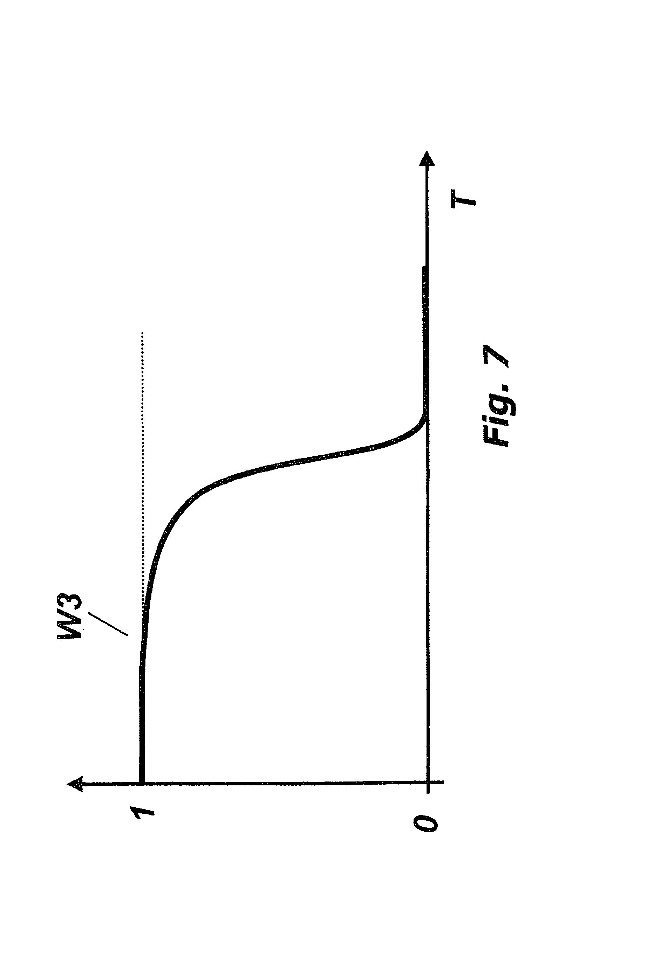

- Wert W3 für den aktuelle Zustand der Komponenten des Antriebsstranges, zum Beispiel Signale von Sensoren 9, 10 für die Temperaturen und/oder das zulässige maximale Moment der Aggregate. Beispielsweise wird der Wert W3 für Modus M4 ("rein elektrisches Fahren") aus einer glatten Funktion der aktuellen Temperatur T des Elektromotors berechnet, die einen maximalen Wert 1 für niedrige Temperaturen (z.B. bis 40°C) annimmt und einen Wert Null bei höheren Temperaturen (z.B. ab 75°C) erreicht (siehe Fig. 7).

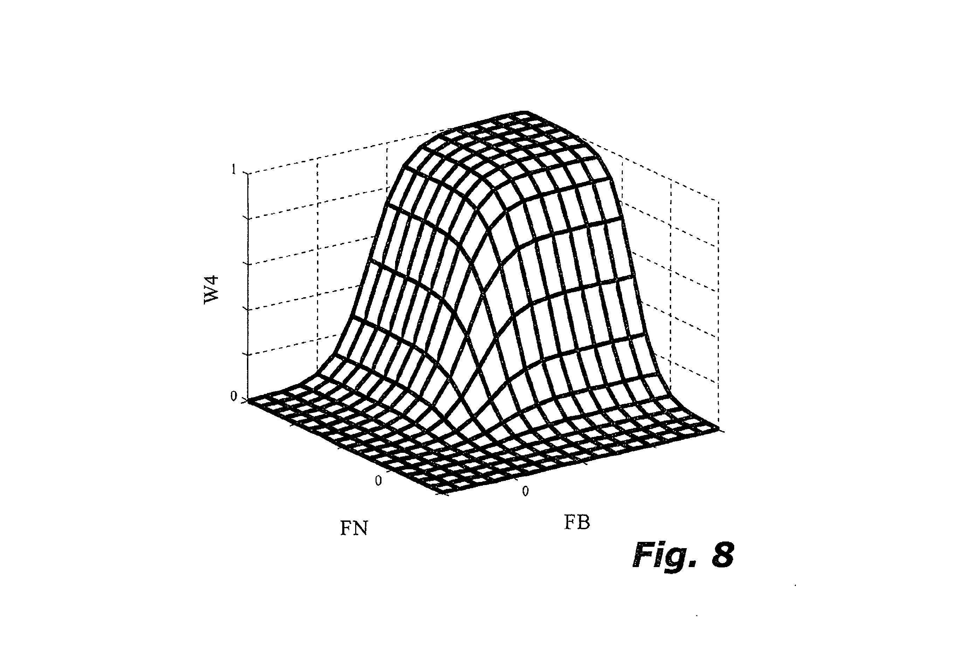

- Wert W4 für das aktuelle Fahrmanöver, beispielsweise die Fahrgeschwindigkeit, die Fahrzeugbeschleunigung FB und/oder die Fahrzeugneigung FN. Beispielsweise wird der Wert W4 für Modus M5 ("Rekuperation") aus einem zweidimensionalen Kennfeld mit den Eingangsgrößen aktuelle Fahrzeugbeschleunigung FB und Fahrzeugneigung FN berechnet, wobei ein maximaler Wert 1 nur für bestimmte Bereiche der Fahrzeugbeschleunigung FB und der Fahrzeugneigung FN ausgegeben wird (siehe Fig. 8).

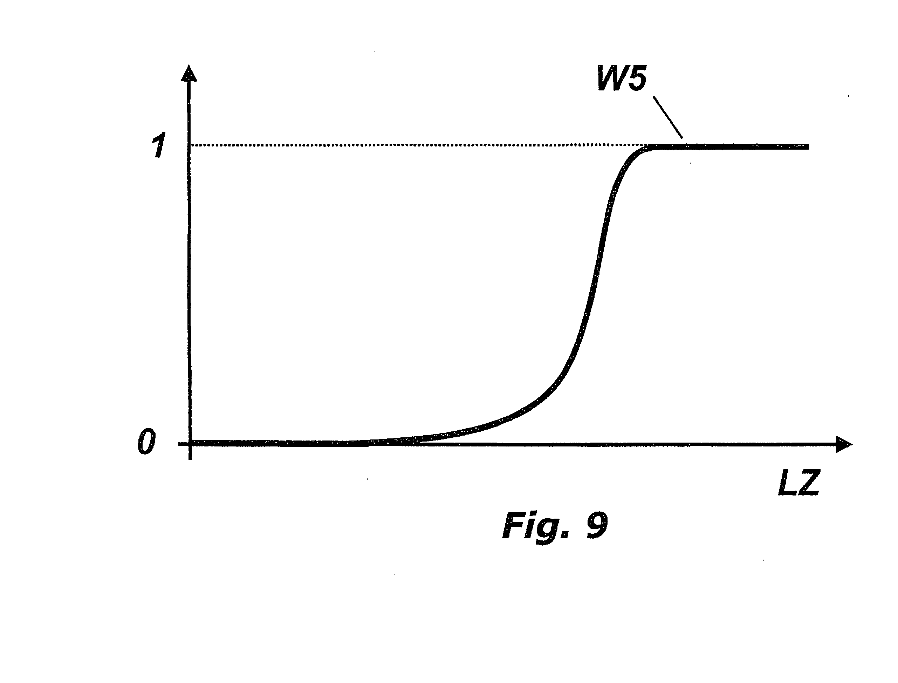

- Aktueller Wert W5 für den Zustand der vorhandenen Energiespeicher, zum Beispiel die für jeweiligen Betriebsmodus verfügbare Energiemenge und/ oder die maximal erlaubte Lade- bzw. Entladeleistung. Zum Beispiel wird, wie in Fig. 9 gezeigt ist, der Wert W5 für Modus M4 ("rein elektrisches Fahren") aus einer glatten Funktion des aktuellen Ladezustands LZ der Batterie berechnet, die einen maximalen Wert 1 für hohen Ladezustand (z.B. ab 75%) annimmt und einen Wert Null bei niedrigem Ladezustand (z.B. bis 50%) erreicht.

- Wert W6 für den Wirkungsgrad des gesamten Systems oder den Wirkungsgrad des Teilsystems, zum Beispiel den Gesamtwirkungsgrad des Fahrzeugs für den Leistungsfluss vom Kraftstofftank bis zu den Antriebsrädern. Beispielweise wird der Wert W6 für Modus M2 ("substituierendes Boosten") als Produkt des thermischen Wirkungsgrads $\eta_T$ und des mechanischen Wirkungsgrads $\eta_M$ des Verbrennungsmotors für den geplanten Betriebspunkt, des Wirkungsgrads $\eta_E$ der E-Maschine für den geplanten Betriebspunkt, sowie des Wirkungsgrads $\eta_B$ der Batterie und des Wirkungsgrads $\eta_G$ der Getriebe berechnet:

$$W6 = \eta_T \cdot \eta_M \cdot \eta_E \cdot \eta_B \cdot \eta_G$$

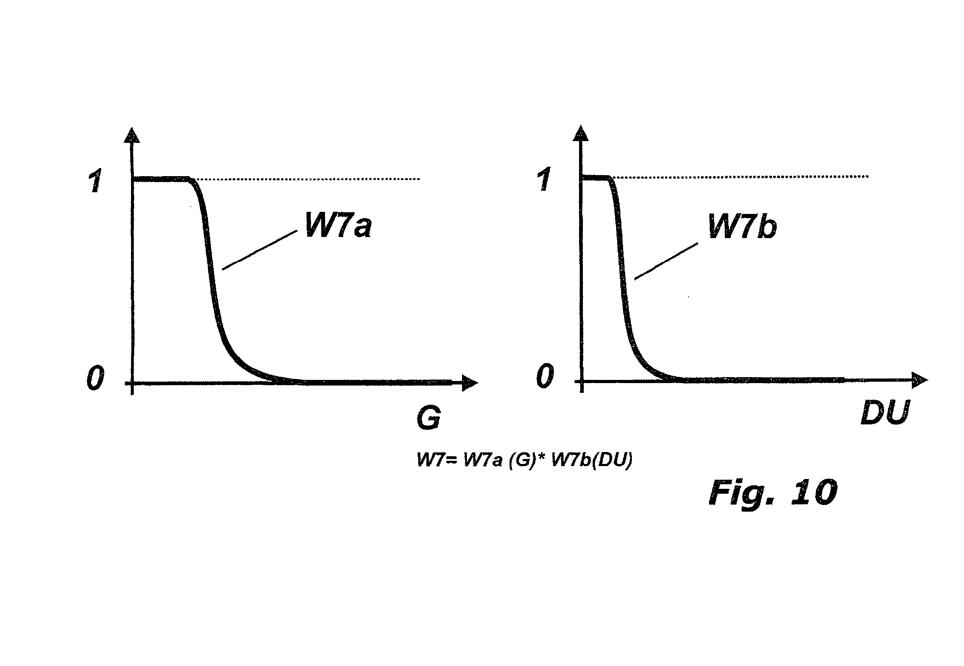

- Wert W7 für Vorgaben an das Fahrzeug, zum Beispiel hinsichtlich des Kraftstoffverbrauchs, der Schadstoffemissionen, des Geräuschverhaltens und/oder der Fahrbarkeit. Beispielweise wird der Wert W7 für Modus M1 ("Laden der Batterie durch Lastanhebung des Verbrennungsmotors und Generatorbetrieb der E-Maschine beim Stillstand des Fahrzeugs") als ein Produkt zweier Faktoren W7a, W7b berechnet. Dabei wird der erste Faktor W7a aus einer glatten Funktion der zu erwartenden Geräuschpegel G und der zweite Faktor W7b als eine glatte Funktion der zu erwartenden Drehzahlunförmigkeit DU des Verbrennungsmotors für den geplanten Betriebspunkt berechnet. Je größer die beiden Parameter Geräuschpegel G und Drehzahlunförmigkeit DU sind (die üblicherweise als Fahrbarkeitskriterien herangezogen werden und selber als Funktion des Betriebspunktes des Verbrennungsmotors abgeschätzt werden können), desto kleiner werden die obengenannten Faktoren W7a, W7b (siehe Fig. 10).

Die Bewertungsgrößen R für den jeweiligen Betriebsmodus M1, M2, M3, M4, M5, M6 können beispielsweise als ein Produkt:

EP 2 588 354 B1

$$R = W1*W2*W3*W4*W5*W6*W7$$

oder als eine gewichtete Summe:

$$R = \sum_{n=1}^{7} K_n W_n \, ,$$

(mit dem Wichtungsfaktor $K_n$, der die Wichtigkeit des Werts $W_n$ für die Bewertung des Betriebsmodus widerspiegelt), oder als andere sinnvolle Kombination der Werte W1, W2, W3, W4, W5, W6, W7 berechnet werden.

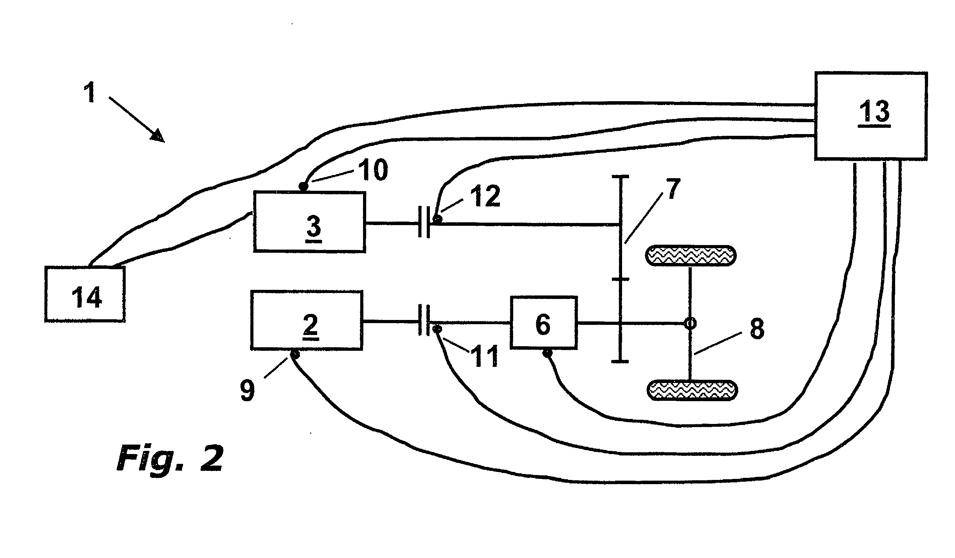

Fig. 2 zeigt schematisch den Antriebsstrang eines Hybridfahrzeuges 1 mit Paralleltopologie mit einem ersten und einem zweiten Antriebsaggregat 2, 3, wobei zum Beispiel das erste Aggregat 2 durch eine Brennkraftmaschine und das zweite Antriebsaggregat 3 durch eine elektrische Maschine gebildet sind. Die Antriebsaggregate 2, 3 wirken über Komponenten des Antriebsstranges wie Kupplungen 4, 5, Getriebe 6, 7 oder dergleichen auf Antriebsräder 8. Über Sensoren 9, 10, 11, 12 werden einer Steuereinheit 13 Informationen über die aktuelle Betriebskonfiguration K übermittelt. In der Steuereinheit 13 werden Steueralgorithmen mit dem hier beschriebenen erfindungsgemäßen Verfahren abgearbeitet und durch Bewertung der in Frage kommenden Betriebsmodi M1, M2, M3, M4 ein erster und ein zweiter Betriebsmodus $M_A$, $M_B$ ausgewählt. Für die Berechnung der Bewertungsgrößen R können die genannten Werte mit einbezogen werden.

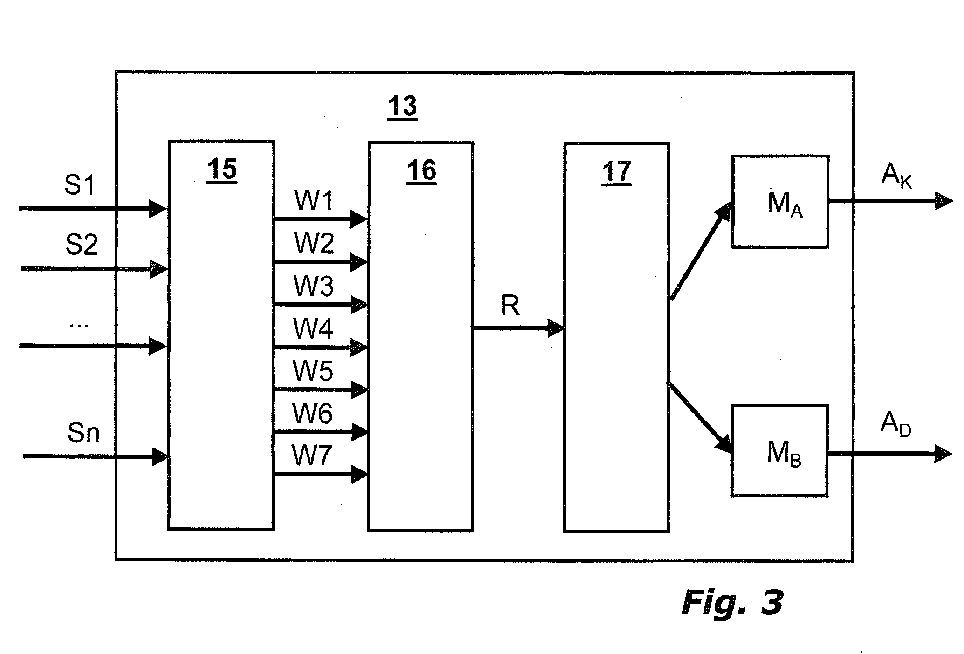

Wie in Fig. 3 dargestellt ist, werden die Signale S1, S2, ... Sn von Sensoren 9, 10, 11, 12 und anderen Messeinheiten im Steuergerät 13 durch Algorithmus 15 ausgewertet um die aktuellen Werte W1, W2, W3, W4, W5, W6, W7 zu errechnen. Ein weiterer Algorithmus 16 leitet aus den Werten W1, W2, W3, W4, W5, W6, W7 die Bewertungsgrößen R ab, die im nächsten Schritt 17 zur Auswahl der Betriebsmodi $M_A$, $M_B$ benutzt werden.

Das beschriebene Verfahren kann für unterschiedliche Varianten des parallelen Hybrid, wie Mikro-, Mild-, Vollhybrid, und für leistungsverzweigten Hybridantrieb angewendet werden. Es eignet sich für alle beliebigen Kombinationen von Betriebsmodi eines bestimmten Hybridfahrzeuges.

Es kann für unterschiedliche Typen der Antriebsstrangkomponenten (zum Beispiel manuelle oder automatisierte Getriebe, Diesel oder Benzin Verbrennungsmotor als erstes Antriebsaggregat, Elektromotor oder hydraulischer Motor als zweites Antriebsaggregat, usw.) angewendet werden.

Die Steuerungsalgorithmen, welche auf dem Verfahren basiert, können in einem oder in mehreren elektronischen Steuergeräten aufgeteilt implementiert werden. Zum Beispiel, kann die Berechnung der Werte W1, W2, W3, W4, W5, W6, W7 durch Algorithmus 15 in einem Steuergerät erfolgen, während die Berechnungen der Algorithmen 16 und 17 (siehe Fig. 3) in einem anderem Steuergerät stattfinden. Besonders vorteilhaft ist es, wenn die Ratings R und Anforderungen $A_K$ und $A_D$ für die Betriebsmodi parallel in mehreren Steuergeräten (vor-) berechnet werden, und der Algorithmus 17 zur Auswahl der Modi und der entsprechenden Anforderungen in einem separaten Steuergerät ausgewertet wird. Dadurch lässt sich eine Redundanz und Ausfallsicherheit erreichen.

Die Steuerungsalgorithmen, welche auf dem Verfahren basieren, ermöglichen eine einfache Ergänzung um weitere Betriebsmodi ohne notwendige Änderungen in den Berechnungsvorschriften für die anderen Modi zu verursachen.

Der Implementierungsaufwand kann wesentlich reduziert werden, wenn die Umschaltungen der Antriebsstrangkonfiguration anforderungsorientiert und nicht betriebsmodeorientiert erfolgt.

Die Berechnung der Bewertungsgrößen R kann beliebig erweitert werden, um unterschiedliche Ziele, vorausschauende Strategien, etc. zu berücksichtigen.

**Patentansprüche**

1. Verfahren zur Steuerung eines Hybridfahrzeuges (1), bei dem zumindest zwei Aggregate (2, 3) Drehmoment für einen Hybridfahrzeugantrieb bereitstellen, wobei der aktuelle Fahrzustand und die aktuelle Betriebskonfiguration (K) der Komponenten des Antriebsstranges erfasst wird, **dadurch gekennzeichnet, dass** zumindest für alle im aktuellen Fahrzustand relevanten Betriebsmodi (M1, M2, M3, M4) des Hybridfahrzeuges (1) jeweils eine Bewertungsgröße R berechnet wird, und dass zwei im aktuellen Fahrzustand relevante Betriebsmodi ($M_A$, $M_B$) des Hybridfahrzeuges (1) ausgewählt werden, wobei der erste Betriebsmodus ($M_A$) den höchsten Wert aller Bewertungsgrößen R und der zweite Betriebsmodus ($M_B$) den höchsten Wert aller Bewertungsgrößen R derjenigen Betriebsmodi (M1, M2) hat, deren erforderliche Betriebskonfiguration (K1) mit der aktuellen Betriebskonfiguration (K) übereinstimmt, und dass basierend auf der Auswahl Anforderungen ($A_K$) für eine neue Betriebskonfiguration (K) zur Realisierung des ausgewählten ersten Betriebsmodus ($M_A$), und Anforderungen ($A_D$) an dynamischen Größen, vorzugsweise Drehmomentanforderungen für den jeweils ausgewählten zweiten Betriebsmodus ($M_B$), vorzugsweise mittels Berechnungsvorschriften für dynamische Größen, ermittelt werden.

2. Verfahren nach Anspruch 1, **dadurch gekennzeichnet, dass** bei der Berechnung der Bewertungsgrößen R zumindest ein aktueller Wert W1 für den Fahrerwunsch, vorzugsweise die Fahrpedalstellung, der Bremspedalstellung, die Gangwahl, ein Einschaltzustand einer Klimaanlage und/oder der Einschaltzustand einer Ökonomiefunktion, berücksichtigt wird.

3. Verfahren nach Anspruch 1 oder 2, **dadurch gekennzeichnet, dass** bei der Berechnung der Bewertungsgrößen R zumindest ein aktueller Wert W2 für die Randbedingungen des Fahrbetriebes, vorzugsweise der aktuelle elektrische Energiebedarf, berücksichtigt wird.

4. Verfahren nach einem der Ansprüche 1 bis 3, **dadurch gekennzeichnet, dass** bei der Berechnung der Bewertungsgrößen R zumindest ein aktueller Wert W3 für den aktuellen Zustand der Komponenten des Antriebsstranges, vorzugsweise die Temperatur und/oder das zulässige maximale Moment der Aggregate (2, 3), berücksichtigt wird.

5. Verfahren nach einem der Ansprüche 1 bis 4, **dadurch gekennzeichnet, dass** bei der Berechnung der Bewertungsgrößen R zumindest ein aktueller Wert W4 für das aktuelle Fahrmanöver, vorzugsweise die Fahrgeschwindigkeit, die Fahrzeugbeschleunigung und/oder die Fahrzeugneigung, berücksichtigt wird.

6. Verfahren nach einem der Ansprüche 1 bis 5, **dadurch gekennzeichnet, dass** bei der Berechnung der Bewertungsgrößen R zumindest ein aktueller Wert W5 für den Zustand zumindest eines Energiespeichers (14), vorzugsweise die verfügbare Energiemenge und/oder die maximal erlaubte Leistung, berücksichtigt wird.

7. Verfahren nach einem der Ansprüche 1 bis 6, **dadurch gekennzeichnet, dass** bei der Berechnung der Bewertungsgrößen R zumindest ein Wert W6 für den Wirkungsgrad des gesamten Systems oder ein Wirkungsgrad eines Teilsystems, vorzugsweise der Gesamtwirkungsgrad des Fahrzeuges für den Leistungsfluss vom Kraftstofftank bis zu den Antriebsrädern, berücksichtigt wird.

8. Verfahren nach einem der Ansprüche 1 bis 7, **dadurch gekennzeichnet, dass** bei der Berechnung der Bewertungsgrößen R zumindest ein Wert W7 für Vorgaben an das Hybridfahrzeug (1), vorzugsweise hinsichtlich Kraftstoffverbrauch, Schadstoffemissionen, Geräusch und/oder Fahrbarkeit, berücksichtigt wird.

9. Verfahren nach einem der Ansprüche 1 bis 8, **dadurch gekennzeichnet, dass** das Umschalten der Antriebsstrangkonfiguration anforderungsorientiert erfolgt.

10. Verfahren nach einem der Ansprüche 1 bis 9, **dadurch gekennzeichnet, dass** die Bewertungsgrößen R für die Betriebsmoden (M1, M2, M3, M4, M5, M6) als Produkt von aktuellen Werten W1, W2, W3, W4, W5, W6, W7 für den Fahrerwunsch, für die Randbedingungen des Fahrbetriebes, für den aktuellen Zustand des Antriebsstranges, für das aktuelle Fahrmanöver, für den Zustand des Energiespeichers, für den Wirkungsgrad des Gesamtsystems und/oder für Vorgaben an das Hybridfahrzeug berechnet werden:

$$R = W1 \cdot W2 \cdot W3 \cdot W4 \cdot W5 \cdot W6 \cdot W7$$

11. Verfahren nach einem der Ansprüche 1 bis 9, **dadurch gekennzeichnet, dass** die Bewertungsgrößen R für die Betriebsmoden (M1, M2, M3, M4, M5, M6) als gewichtete Summe von aktuellen Werten W1, W2, W3, W4, W5, W6, W7 für den Fahrerwunsch, für die Randbedingungen des Fahrbetriebes, für den aktuellen Zustand des Antriebsstranges, für das aktuelle Fahrmanöver, für den Zustand des Energiespeichers, für den Wirkungsgrad des Gesamtsystems und/oder für Vorgaben an das Hybridfahrzeug berechnet werden:

$$R = \sum_{n=1}^{7} K_n \cdot W_n$$

wobei $K_n$ ein Wichtungsfaktor ist.

12. Vorrichtung zur Durchführung des Verfahrens zur Steuerung eines Hybridfahrzeuges (1), mit zumindest zwei Drehmoment für einen Hybridfahrzeugantrieb bereitstellenden Aggregaten (2, 3), insbesondere einer Brennkraftmaschine und zumindest einer elektrischen Maschine, nach einem der Ansprüche 1 bis 11, mit zumindest einer Steuereinheit (13), zur Erfassung des aktuellen Fahrzustandes und der aktuellen Betriebskonfiguration (K) der Komponenten des Antriebsstranges, **dadurch gekennzeichnet, dass** in der zumindest einen Steuereinheit (13) zumindest ein Steuerungsalgorithmus implementiert ist, welcher vorsieht, dass zumindest für alle im aktuellen Fahrzustand relevanten Betriebsmodi (M1, M2, M3, M4) des Hybridfahrzeuges (1) jeweils eine Bewertungsgröße R berechnet wird, und wobei zwei im aktuellen Fahrzustand relevante Betriebsmodi ($M_A$, $M_B$) des Hybridfahrzeuges ausgewählt werden, wobei der erste Betriebsmodus ($M_A$) den höchsten Wert aller Bewertungsgrößen R und der zweite Betriebsmodus ($M_B$) den höchsten Wert aller Bewertungsgrößen R derjenigen Betriebsmodi hat, deren erforderliche Betriebskonfiguration (K1) mit der aktuellen Betriebskonfiguration (K) übereinstimmt, und dass basierend auf der Auswahl Anforderungen ($A_K$) für eine neue Betriebskonfiguration (K) zur Realisierung des ausgewählten ersten Betriebsmodus ($M_A$), und Anforderungen ($A_D$) an dynamischen Größen, vorzugsweise Drehmomentanforderungen für den jeweils ausgewählten zweiten Betriebsmodus ($M_B$), vorzugsweise mittels Berechnungsvorschriften für dynamische Größen, ermittelt werden.

13. Vorrichtung nach Anspruch 12, **dadurch gekennzeichnet, dass** die Steuerungsalgorithmen in mehreren elektronischen Steuergeräten aufgeteilt implementiert sind, wobei vorzugsweise die Bewertungsgrößen R und Anforderungen der Betriebsmodi (M) parallel in mehreren Steuergeräten zugleich berechnet werden.

**Claims**

1. A method for controlling a hybrid vehicle (1), in which at least two assemblies (2, 3) provide torque for a hybrid vehicle drive, wherein the current vehicle state and the current operating configuration (K) of the components of the drive train are detected, **characterised in that** respectively one evaluation variable R is calculated at least for all operating modes (M1, M2, M3, M4) of the hybrid vehicle (1) which are relevant in the current driving state, and two operating modes ($M_A$, $M_B$) of the hybrid vehicle (1) which are relevant in the current driving state are selected, the first operating mode ($M_A$) having the highest value of all evaluation variables R and the second operating mode ($M_B$) having the highest value of all evaluation variables R of those operating modes (M1, M2), whose necessary operating configuration (K1) corresponds to the current operating configuration (K), and on the basis of the selection, requirements ($A_K$) for a new operating configuration (K) for implementing the selected first operating mode ($M_A$), and requirements ($A_D$) for dynamic variables, preferably torque requirements for the respective selected second operating mode ($M_B$), are determined, preferably by means of calculation rules for dynamic variables.

2. The method according to Claim 1, **characterised in that**, during the calculation of the evaluation variables R, at least one current value W1 for the driver command, preferably the gas pedal position, the brake pedal position, the gear selection, the activation state of an air conditioner, and/or the activation state of the economy function, is taken into consideration.

3. The method according to claim 1 or 2, **characterised in that**, during the calculation of the evaluation variables R, at least one current value W2 for the boundary conditions of the driving operation, preferably the current electrical energy demand, is taken into consideration.

4. The method according to one of claims 1 to 3, **characterised in that**, during the calculation of the evaluation variables R, at least one current value W3 for the current state of the components of the drive train, preferably the temperature and/or the permissible maximum torque of the assemblies (2, 3), is taken into consideration.

5. The method according to one of claims 1 to 4, **characterised in that**, during the calculation of the evaluation variables R, at least one current value W4 for the current driving maneuver, preferably the driving velocity, the vehicle acceleration, and/or the vehicle inclination, is taken into consideration.

6. The method according to one of claims 1 to 5, **characterised in that**, during the calculation of the evaluation variables R, at least one current value W5 for the state of at least one energy store (14), preferably the available quantity of energy and/or the maximum permitted power, is taken into consideration.

7. The method according to one of claims 1 to 6, **characterised in that**, during the calculation of the evaluation variables R, at least one value W6 for the efficiency of the overall system or an efficiency of a subsystem, preferably the overall efficiency of the vehicle for the power flow from the fuel tank up to the drive wheels, is taken into consideration.

8. The method according to one of claims 1 to 7, **characterised in that**, during the calculation of the evaluation variables R, at least one value W7 for specifications for the hybrid vehicle (1), preferably with respect to fuel consumption, pollutant emissions, noise, and/or drivability, is taken into consideration.

9. The method according to one of claims 1 to 8, **characterised in that** the changeover of the drive train configuration is performed in a requirementoriented manner.

10. The method according to one of claims 1 to 9, **characterised in that** the evaluation variables R for the operating modes (M1, M2, M3, M4, M5, M6) are calculated as the product of current values W1, W2, W3, W4, W5, W6, W7 for the driver command, for the boundary conditions of the driving operation, for the current state of the drive train, for the current driving maneuver, for the state of the energy store, for the efficiency of the overall system, and/or for specifications for the hybrid vehicle:

$$R = W1 \cdot W2 \cdot W3 \cdot W4 \cdot W5 \cdot W6 \cdot W7$$

11. The method according to one of claims 1 to 9, **characterised in that** the evaluation variables R for the operating modes (M1, M2, M3, M4, M5, M6) are calculated as a weighted sum of current values W1, W2, W3, W4, W5, W6, W7 for the driver command, for the boundary conditions of the driving operation, for the current state of the drive train, for the current driving maneuver, for the state of the energy store, for the efficiency of the overall system, and/or for specifications for the hybrid vehicle:

$$R = \sum_{n=1}^{7} K_n \cdot W_n$$

where $K_n$ is a weighting factor.

12. A device for carrying out the method for controlling a hybrid vehicle (1), having at least two assemblies (2, 3) which provide torque for a hybrid vehicle drive, in particular an internal combustion engine and at least one electrical machine, according to one of Claims 1 to 11, having at least one control unit (13), for detecting the current driving state and the current operating configuration (K) of the components of the drive train, **characterised in that** at least one control algorithm is implemented in the at least one control unit (13), which provides that respectively one evaluation variable R is calculated at least for all operating modes (M1, M2, M3, M4) of the hybrid vehicle (1) which are relevant in the current driving state, and wherein two operating modes ($M_A$, $M_B$) of the hybrid vehicle which are relevant in the current driving state are selected, wherein the first operating mode ($M_A$) has the highest value of all evaluation variables R and the second operating mode ($M_B$) has the highest value of all evaluation variables R of those operating modes whose required operating configuration (K1) corresponds to the current operating configuration (K), and on the basis of the selection, requirements ($A_K$) for a new operating configuration (K) for implementing the selected first operating mode ($M_A$), and requirements ($A_D$) for dynamic variables, preferably torque requirements for the respective selected second operating mode ($M_B$), are determined, preferably by means of calculation rules for dynamic variables.

13. The device according to claim 12, **characterised in that** the control algorithms are implemented allocated into multiple electronic control units, the evaluation variables R and requirements of the operating modes (M) preferably being calculated simultaneously in parallel in multiple control units.

**Revendications**

1. Procédé de commande d'un véhicule hybride (1) selon lequel au moins deux unités (2, 3) fournissent un couple de rotation pour permettre l'entrainement de ce véhicule hybride, l'état de conduite actuel et la configuration de fonctionnement actuelle des composants de la ligne d'entrainement étant détectés,
   **caractérisé en ce qu'**
   au moins pour tous les modes de fonctionnement (M1, M2, M3, M4) du véhicule hybride (1) pertinents dans l'état de conduite actuel, on calcule respectivement une grandeur d'évaluation R et on choisit deux modes de fonctionnement ($M_A$, $M_B$) du véhicule hybride (1) pertinents dans l'état de conduite actuel, le premier mode de fonctionnement ($M_A$) ayant la valeur maximum de toutes les grandeurs d'évaluation R tandis que le second mode de fonctionnement ($M_B$) a la valeur maximum de toutes les grandeurs d'évaluation R des modes de fonctionnement (M1, M2) dont la configuration de fonctionnement nécessaire (K1) coïncide avec la configuration de fonctionnement actuelle (K), et, à partir du choix on détermine des exigences ($A_K$) pour une nouvelle configuration de fonctionnement (K) permettant la réalisation du premier mode de fonctionnement ($M_A$) choisi et des exigences ($A_D$) de grandeurs dynamiques de préférence des exigences de couple de rotation pour le second mode de fonctionnement ($M_B$) respectivement choisi, de préférence au moyen d'étapes de calcul de grandeurs dynamiques.

2. Procédé conforme à la revendication 1,
   **caractérisé en ce que**
   lors du calcul des grandeurs d'évaluation R on prend en considération au moins une valeur actuelle W1 du souhait du conducteur, de préférence la position de la pédale d'accélérateur, la position de la pédale de frein, le choix du rapport de vitesse, un état de branchement d'une installation de climatisation et/ou l'état de commutation d'une fonction d'économie.

3. Procédé conforme à la revendication 1 ou 2,
   **caractérisé en ce que**
   lors du calcul des grandeurs d'évaluation R on prend en considération au moins une valeur actuelle W2 des conditions marginales du fonctionnement de conduite, de préférence la consommation actuelle en énergie électrique.

4. Procédé conforme à l'une des revendications 1 à 3,
   **caractérisé en ce que**
   lors du calcul des grandeurs d'évaluation R on prend en considération au moins une valeur actuelle W3 de l'état actuel des composants de la ligne d'entrainement, de préférence la température et/ou le couple maximum admissible des unités (2, 3).

5. Procédé conforme à l'une des revendications 1 à 4,
   **caractérisé en ce que**
   lors du calcul des grandeurs d'évaluation R on prend en considération au moins une valeur actuelle W4 de la manoeuvre de conduite actuelle, de préférence la vitesse de déplacement, l'accélération de déplacement et/ou l'inclinaison du véhicule.

6. Procédé conforme à l'une des revendications 1 à 5,
   **caractérisé en ce que**
   lors du calcul des grandeurs d'évaluation R on prend en considération au moins une valeur actuelle W5 de l'état d'au moins un accumulateur d'énergie (14), de préférence la quantité d'énergie disponible et/ou la puissance maximum autorisée.

7. Procédé conforme à l'une des revendications 1 à 6,
   **caractérisé en ce que**
   lors du calcul des grandeurs d'évaluation R on prend en considération au moins une valeur actuelle W6 du rendement du système global ou d'un rendement d'un système partiel, de préférence le rendement total du véhicule pour le circuit de puissance allant du réservoir de carburant jusqu'aux roues d'entrainement.

8. Procédé conforme à l'une des revendications 1 à 7,
   **caractérisé en ce que**
   lors du calcul des grandeurs d'évaluation R on prend en considération au moins une valeur actuelle W7 de prescriptions pour le véhicule hybride (1), par exemple se rapportant à la consommation de carburant, aux émissions de substances nocives, au bruit et/ou à la possibilité de transport.

**9.** Procédé conforme à l'une des revendications 1 à 8,
**caractérisé en ce que**
la commutation de la configuration de la ligne d'entrainement s'effectue en fonction des exigences.

**10.** Procédé conforme à l'une des revendications 1 à 9,
**caractérisé en ce que**
les grandeurs d'évaluation R pour les modes de fonctionnement (M1, M2, M3, M4, M5, M6) sont calculées sous la forme de produit des valeurs actuelles W1, W2, W3, W4, W5, W6, W7 du souhait du conducteur, des conditions marginales du fonctionnement de conduite, de l'état actuel de la ligne d'entrainement, de la manoeuvre de conduite actuelle, de l'état de l'accumulateur d'énergie, du rendement du système global et/ou de prescriptions pour le véhicule hybride :

$$R = W1 \cdot W2 \cdot W3 \cdot W4 \cdot W5 \cdot W6 \cdot W7$$

**11.** Procédé conforme à l'une des revendications 1 à 9,
**caractérisé en ce que**
les grandeurs d'évaluation R pour les modes de fonctionnement (M1, M2, M3, M4, M5, M6) sont calculées sous la forme d'une somme pondérée des valeurs actuelles W1, W2, W3, W4, W5, W6, W7 du souhait du conducteur, des conditions marginales du fonctionnement de conduite, de l'état actuel de la ligne d'entrainement, de la manoeuvre de conduite actuelle, de l'état de l'accumulateur d'énergie, du rendement du système global et/ou de prescriptions pour le véhicule hybride :

$$R = \sum_{n=1}^{7} K_n \cdot W_n$$

formule dans laquelle $K_n$ est un facteur de pondération.

**12.** Dispositif permettant la mise en oeuvre du procédé de commande d'un véhicule hybride (1) comportant au moins deux unités (2, 3) fournissant un couple de rotation pour permettre l'entrainement de ce véhicule hybride, en particulier un moteur à combustion interne et au moins un moteur électrique, conforme à l'une des revendications 1 à 11, comportant au moins une unité de commande (13) permettant de détecter l'état de conduite actuel et la configuration de fonctionnement actuelle (K) des composants de la ligne d'entrainement,
**caractérisé en ce que**
l'unité de commande (13) applique au moins un algorithme de commande selon lequel au moins pour tous les modes de fonctionnement (M1, M2, M3, M4) du véhicule hybride (1) pertinents dans l'état de conduite actuel, une grandeur d'évaluation R est respectivement calculée, et deux modes de fonctionnement ($M_A$, $M_B$) du véhicule hybride pertinents dans l'état de conduite actuel sont choisis, le premier mode de fonctionnement ($M_A$) ayant la valeur maximum de toutes les grandeurs d'évaluation R tandis que le second mode de fonctionnement ($M_B$) a la valeur maximum de toutes les grandeurs d'évaluation R des modes de fonctionnement respectif, dont la configuration de fonctionnement nécessaire (K1) coïncide avec la configuration de fonctionnement actuelle (K), et à partir du choix on détermine des exigences ($A_K$) pour une nouvelle configuration de fonctionnement (K) permettant la réalisation du premier mode de fonctionnement ($M_A$) choisi, et des exigences ($A_D$) de grandeurs dynamiques, de préférences des exigences de couple de rotation pour le second mode de fonctionnement ($M_B$) respectivement choisi, de préférence au moyen d'étapes de calcul de grandeurs dynamiques.

**13.** Dispositif conforme à la revendication 12,
**caractérisé en ce que**
les algorithmes de commande sont appliqués en étant répartis dans plusieurs appareils de commande électroniques, les grandeurs d'évaluation R et les exigences des modes de fonctionnement (M) étant de préférence calculées simultanément en parallèle dans plusieurs appareils de commande.

Fig. 1

**Fig. 2**

Fig. 3

EP 2 588 354 B1

Fig. 4

$W1 = W1a\ (GP)\ *\ W1b(BP)$

Fig. 5

EP 2 588 354 B1

**Fig. 6**

EP 2 588 354 B1

*Fig. 7*

Fig. 8

Fig. 9

W7= W7a (G)* W7b(DU)

Fig. 10

EP 2 588 354 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4430670 B4
- DE 102007050652 A1
- US 20020062183 A1
- US 7349776 B2
- US 6230496 B1
- US 5806617 A
- US 6766874 B2
- US 20040060751 A1
- WO 2008071381 A2